# EUROPÄISCHE PATENTANMELDUNG

(11) **EP 4 059 872 A1**
(43) Veröffentlichungstag der Anmeldung: **21.09.2022**
(21) Anmeldenummer: 21162583.5
(22) Anmeldetag: 15.03.2021
(51) Int. Cl.: B65G 53/52, B04C 5/12, B04C 5/28, B07B 7/086, B07B 13/16

(54) **PNEUMATISCHE LEITUNG FÜR EINE FUTTER- ODER NAHRUNGSMITTELMÜHLE**

(71) Anmelder: Bühler AG, 9240 Uzwil (CH)
(72) Erfinder: Hausammann, Kevin, 9000 St. Gallen (CH); Moosmann, Jürgen, 88276 Berg (DE)
(74) Vertreter: Hepp Wenger Ryffel AG

(57) **Zusammenfassung**

Die vorliegende Erfindung betrifft ein Leitungsrohr (1) für ein pneumatisches Leitungssystem (5) einer Futter- oder Nahrungsmittelmühle, umfassend einen Basiskörper (2), mindestens eine im Wesentlichen flache Grundfläche (3), und mindestens eine in der Grundfläche (3) angeordnete Öffnung (4) zur Verbindung mit einem Übergangsrohr (6). Die vorliegende Erfindung betrifft weiterhin ein pneumatisches Leitungssystem (5) mit einem derartigen Leitungsrohr (1), einen Schleusentisch umfassend das pneumatische Leitungssystem (5) sowie eine Futter- oder Nahrungsmittelmühle, umfassend einen derartigen Schleusentisch.

## Beschreibung

Die vorliegende Erfindung betrifft eine pneumatische Leitung für eine Futter- oder Nahrungsmittelmühle.

Futter- oder Nahrungsmittelmühlen, beispielsweise Getreidemühlen oder Mühlen zur Herstellung anderer Nahrungsmittel wie Schokolade, finden Anwendung bei der Verarbeitung von Futter- oder Nahrungsmitteln, beispielsweise Getreide, Getreidevermahlungsprodukten und Getreideendprodukte der Müllerei (insbesondere Vermahlen von Weichweizen, Durum, Roggen, Mais und/oder Gerste) oder Spezialmüllerei (insbesondere Schälen und/oder Vermahlen von Soja, Buchweizen, Gerste, Dinkel, Hirse/Sorghum, Pseudocerealien und/oder Hülsenfrüchten), bei der Herstellung von Futter für Nutz- und Haustiere, Fische und Krustentiere, bei der Verarbeitung von Ölsaaten; bei der Verarbeitung von Biomasse und Herstellung von Energiepellets, in industriellen Mälzerei- und Schroterei-Anlagen, sowie bei der Verarbeitung von Kakaobohnen, Nüssen und Kaffeebohnen. Derartige Mahlanlagen sind bekannt.

Getreidemühlen umfassen üblicherweise einen oder mehrere Walzenstühle, in welchen das Getreide zerkleinert und gemahlen wird, als auch verschiedene Reinigungseinheiten wie Plansichter oder Griessputzmaschinen.

Das fertige Produkt wird anschliessend durch eine pneumatische Leitung weg transportiert. Vorteilhaft werden die pneumatischen Förderleitungen (Übergangsleitungen) mehrerer Futter- oder Nahrungsmittelmühlen zu einem sogenannten Schleusentisch geführt, wo die Luft mit Filtern wie Zyklonabscheidern (Tangentialabscheidern) und Austragschleusen von Partikeln gereinigt wird und anschliessend wieder verwendet werden kann.

Die Förderluft wird mittels eines Unterdrucks von bis zu etwa 0,2 bar durch die Leitungen gesaugt. Durch Zyklonabscheider werden die meisten in der Förderluft enthaltenen Partikel von der Luft abgetrennt und durch eine Austragsschleuse in eine Reinigungseinheit wie einen Plansichter überführt.

Hierfür ist es erforderlich, mehrere pneumatische Leitungen (Rohre) in eine Hauptleitung zusammenzufassen.

Die herkömmlich verwendeten Leitungsrohre sind zylindrisch mit rundem Durchmesser. Herstellungstechnisch bedingt (die Rohre werden durch Walzen hergestellt) können derartige Leitungsrohre nicht aus rostfreiem Edelstahl und nur bis zu einer maximalen Länge von etwa 1.7 m gefertigt werden. Für erforderliche Leitungslängen von 0.9 m bis zu 4.5 m sind daher mehrere Leitungsrohre miteinander zu verbinden (beispielsweise durch Schweissen) .

Zudem genügen zylindrische Leitungen mit rundem Durchmesser nicht den Hygieneanforderungen im Lebensmittelbereich, da sie nicht aus einem hygienisch akzeptablen Material wie rostfreiem Edelstahl gefertigt werden können und zudem Verbindungselemente wie Schweissnähte vorhanden sind.

Die von den Futter- oder Nahrungsmittelmühlen in die Hauptleitung führenden Übergangsleitungen müssen üblicherweise mittels einer Flanschverbindung mit der Hauptleitung verbunden werden, da es herstellungstechnisch schwierig ist, die Übergangsrohre mit der zylindrischen Hauptleitung mit runden Durchmesser zu verbinden.

Es war die Aufgabe der vorliegenden Erfindung ein Leitungsrohr bereitzustellen, das sich in verbesserter Weise als Hauptleitung eines pneumatischen Leitungssystems einer Futter- oder Nahrungsmittelmühle eignet und die vorstehend beschriebenen Probleme überwindet.

Die vorstehende Aufgabe wird erfindungsgemäss durch den Gegenstand der beigefügten Ansprüche gelöst.

Im Detail betrifft die vorliegende Erfindung ein Leitungsrohr für ein pneumatisches Leitungssystem einer Futter- oder Nahrungsmittelmühle, umfassend einen Basiskörper, mindestens eine im Wesentlichen flache Grundfläche, und mindestens eine in der Grundfläche angeordnete Öffnung zur Verbindung mit einem Übergangsrohr.

Die Grundfläche weist an den Stellen, an denen die Übergangsrohre mit dem Leitungsrohr zusammengeführt werden, eine ebene Einlaufgeometrie auf.

Gemäss der vorliegenden Erfindung soll unter "im Wesentlichen flach" verstanden werden, dass die entsprechende Fläche maximal eine konvexe Krümmung von maximal 10°, vorzugsweise maximal 5° aufweist und insbesondere bevorzugt völlig flach ist.

Es wurde gefunden, dass ein Leitungsrohr mit mindestens einer im Wesentlichen flachen Grundfläche über diese Grundfläche viel einfacher mit mindestens einem Übergangsrohr verbunden werden kann. Das mindestens eine Übergangsrohr kann flach in die im Wesentlichen flache Grundfläche eingeleitet werden, was eine Verbindung durch einfaches Schweissen ermöglicht.

Der Basiskörper des Leitungsrohres ist der Teil des Leitungsrohres ohne die im Wesentlichen flache Grundfläche. Der Basiskörper des Leitungsrohres kann in seiner Schnittfläche die Form eines Halbkreises oder eines Vielecks wie eines Dreiecks, eines Vierecks, eines Fünfecks, eines Sechsecks, oder eines Achtecks aufweisen. Erfindungsgemäss bevorzugt ist die Form eines Vielecks, insbesondere bevorzugt eines Achtecks (Oktagons), da ein derart geformtes Leitungsrohr vorteilhaft aus rostfreiem Edelstahl gefertigt werden kann. Die Schnittfläche des Basiskörpers ist die Fläche, welche bei einem Schnitt durch das Rohr senkrecht zu dessen Längsachse erhalten wird.

Die Herstellung derart geformter Rohre, insbesondere aus rostfreiem Edelstahl, ist bekannt. Es ist grundsätzlich möglich, Basiskörper und die im Wesentlichen flache Grundfläche des Leitungsrohres getrennt herzustellen und nachträglich zu verbinden, beispielsweise durch Schweissen. Erfindungsgemäss bevorzugt ist das Leitungsrohr jedoch einstückig, d.h. die im Wesentlichen flache Grundfläche ist integraler Bestandteil des Leitungsrohres.

Das erfindungsgemässe Leitungsrohr kann (insbesondere wenn seine Schnittfläche die Form eines Vielecks aufweist) deutlich länger einstückig gefertigt werden als herkömmliche Rohre mit rundem Durchmesser. Beispielsweise können erfindungsgemässe Leitungsrohre eine Länge von 0,5 m bis 6 m, vorzugsweise 2 m bis 5 m und insbesondere bevorzugt 3 m bis 4,5 m aufweisen. Es ist daher erfindungsgemäss nicht erforderlich, kürzere Leitungsrohre miteinander zu verbinden, um ein Leitungsrohr der anwendungsgemäss erforderlichen Länge zu erhalten. Hygienisch bedenkliche Verbindungselemente wie Schweissnähte können daher reduziert oder vollständig eliminiert werden.

Erfindungsgemässe Leitungsrohre weisen eine in diesem Anwendungsbereich übliche Dicke (längste Breite der Schnittfläche) auf.

Erfindungsgemässe Leitungsrohre mit einer Schnittfläche in Form eines Vielecks weisen zudem im Vergleich zu herkömmlichen runden Leitungsrohren ein verbessertes Strömungsverhalten auf, da sich in ihrem Innenraum während des Betriebs deutlich kleinere sogenannte Verlustzonen ausbilden als bei runden Leitungsrohren. Erfindungsgemäss sind Verlustzonen Bereiche im Innenraum des Leitungsrohres, welche von der Luft nur mit geringer Geschwindigkeit durchströmt werden. Insbesondere wenn sich Verlustzonen im Bodenbereich oder im Bereich von Ecken eines Leitungsrohres ausbilden, besteht das Risiko einer unerwünschten Partikelablagerung in diesen Verlustzonen. Dies ist aus hygienischen Gründen nachteilig. Zudem ist das Durchleiten von Luft durch das Leitungsrohr umso energieeffizienter, je weniger und/oder je kleinere Verlustzonen im Innenraum des Leitungsrohres ausgebildet werden. Als erfindungsgemäss bevorzugt hat sich in diesem Zusammenhang ein Leitungsrohr mit einer achteckigen (oktagonalen) Schnittfläche erwiesen.

In der im Wesentlichen flachen Grundfläche des erfindungsgemässen Leitungsrohres ist mindestens eine Öffnung zur Verbindung mit einem Übergangsrohr angeordnet. Die Anzahl an Öffnungen im erfindungsgemässen Leitungsrohr hängt von dessen (variabler) Länge ab. Die Öffnungen sind so voneinander beabstandet, dass Übergangsrohre in die entsprechenden Öffnungen eingeführt beziehungsweise mit diesen verbunden werden können, ohne sich gegenseitig zu behindern. Vorzugsweise ist zwischen zwei benachbarten Öffnungen (vom jeweiligen Seitenrand aus gemessen) ein Abstand im Bereich von 10 cm bis 50 cm, bevorzugt 15 cm bis 30 cm vorhanden.

Vorzugsweise weist ein erfindungsgemässes Leitungsrohr 1 bis 50, bevorzugter 1 bis 9 Öffnungen auf.

Erfindungsgemäss bevorzugt sind die Öffnungen elliptisch. In Abhängigkeit der Form der anzuordnenden Übergangsleitungen können aber auch andere Formen (beispielsweise vieleckige Formen wie oktagonale Formen) vorgesehen sein.

Die vorliegende Erfindung betrifft auch ein pneumatisches Leitungssystem für eine Futter- oder Nahrungsmittelmühle, umfassend ein erfindungsgemässes Leitungsrohr, und mindestens ein Übergangsrohr, welches mit einer Öffnung verbunden ist, die in einer im Wesentlichen flachen Grundfläche des Leitungsrohres angeordnet ist.

Übergangsrohre für pneumatische Leitungen in Futter- oder Nahrungsmittelmühlen sind hinlänglich bekannt. Da gemäss der vorliegenden Erfindung die Übergangsleitungen flach in die im Wesentlichen flache Grundfläche des Leitungsrohres eingeführt werden können, ergeben sich herstellungstechnische Vorteile. Beispielsweise müssen keine Flanschverbindungen eingesetzt werden. Die Übergangsrohre können in die Öffnungen des Leitungsrohres passgenau eingeführt und wahlweise mit dem Leitungsrohr beispielsweise durch Schweissverbindungen verbunden werden. Die Übergangsrohre können erfindungsgemäss aus rostfreiem Edelstahl gefertigt werden. Dies alles verbessert die hygienischen Eigenschaften.

Erfindungsgemäss bevorzugt ist das mindestens eine Übergangsrohr in die entsprechende Öffnung des Leitungsrohres eingesteckt oder auf eine andere Weise lösbar verbunden, d.h. nicht fest verbunden. Bei dieser Ausführungsform kann das üblicherweise vergleichbar lange Leitungsrohe (mit einer Länge von bis zu 4.5 m) einfach abmontiert werden, was den An- und Abbau an beziehungsweise von einer Futter- oder Nahrungsmittelmühle erleichtert. Erfindungsgemäss bevorzugt können die Übergangsrohre gebogen sein und mit einem ausgewählten Übergangswinkel in das Leitungsrohr eingeführt werden. Bevorzugte Übergangswinkel liegen im Bereich von 0° bis 60°, bevorzugter 5° bis 45°. Besonders bevorzugt weisen alle Übergangsleitungen denselben Übergangswinkel auf. Die Krümmungsradien werden vorzugsweise in Abhängigkeit vom Durchmesser des Übergangsrohres eingestellt. Bevorzugt ist ein Wert des Krümmungsradius, welcher dem 1.5-2-fachen des Rohrdurchmessers entspricht.

Die Herstellung gebogener Rohre ist hinlänglich bekannt. Es ist erfindungsgemäss bevorzugt und möglich (insbesondere wenn alle Übergangsleitungen denselben Übergangswinkel aufweisen), die Übergangsrohre mit Hilfe des Dornbiegeverfahrens (mandrel bending) oder aus geschweissten Halbschalen herzustellen. Dieses Verfahren ist bekannt. Das Dornbiegen ist ein Verfahren, bei dem ein Stahlstab in das Rohr eingeführt wird, während es gebogen wird. Das Dornbiegen von Rohren wird von einer Maschine wie einer CNC-Rohrbiegemaschine durchgeführt, die die ideale Wahl für das Biegen von dünnen Rohren ohne Verformungen in einem extrem engen Radius ist.

Vorzugsweise umfasst das erfindungsgemässe Leitungsrohr 1 bis 50, bevorzugter 1 bis 10 Übergangsrohre, welche in die entsprechenden Öffnungen des Leitungsrohres eingeführt sind.

Die vorliegende Erfindung betrifft auch einen Schleusentisch für eine Futter- oder Nahrungsmittelmühle, umfassend ein erfindungsgemässes Leitungsrohr oder ein erfindungsgemässes pneumatisches Leitungssystem.

Schleusentische für eine Futter- oder Nahrungsmittelmühle sind bekannt. Sie umfassen ein Gerüst, beispielsweise aus rostfreiem Edelstahl. In diesem Gerüst ist auf geeignete und bekannte Weise ein erfindungsgemässes Leitungsrohr angeordnet. Es können in einem Schleusentisch auch mehrere erfindungsgemässe Leitungsrohre (beispielsweise zwei erfindungsgemässe Leitungsrohre) angeordnet sein. Analog kann der Schleusentisch auch mindestens ein Übergangsrohr umfassen, welches in eine entsprechende Öffnung des Leitungsrohres wie vorstehend beschrieben angeordnet ist. In diesem Fall umfasst der erfindungsgemässe Schleusentisch ein erfindungsgemässes pneumatisches Leitungssystem.

Wie vorstehend beschrieben umfasst der Schleusentisch vorzugsweise ein erfindungsgemässes pneumatisches Leitungssystem mit 1 bis 50, bevorzugter 1 bis 10 Übergangsrohren pro Leitungsrohr, welche in die entsprechenden Öffnungen des Leitungsrohres eingeführt sind. Ein erfindungsgemässer Schleusentisch kann somit über die entsprechenden Übergangsrohre an eine entsprechend grosse Anzahl von Mahlanlagen angeschlossen sein.

Im erfindungsgemässen Schleusentisch ist vorzugsweise weiterhin pro Übergangsleitung ein Zyklonabscheider, eine Austragsschleuse und eine Klappe bereitgestellt. Es handelt sich hierbei um eine übliche Anordnung.

Aus einer Mahlanlage gelangt ein Luft-Partikelgemisch zunächst in eine Trennvorrichtung. Erfindungsgemäss bevorzugt ist die Trennvorrichtung ein Zyklonabscheider. Zyklonabscheider sind hinlänglich bekannt.

Gemäss einer erfindungsgemässen Ausführungsform kann der Zyklonabscheider direkt in der Mahlanlage angeordnet und mit dieser schwingend verbunden sein. Eine derartige Ausführungsform ist in der EP-3 613 515 A1 beschrieben.

Nach Verlassen des Zyklonabscheider gelangt das Luft-Partikelgemisch in eine Austragschleuse, wo etwa 99% des Partikelanteils in eine Reinigungsvorrichtung wie einen Plansichter überführt werden, während die Luft mit einem Partikelanteil von kleiner oder gleich 1% durch eine Klappe und ein Übergangsrohr in das erfindungsgemässe Leitungsrohr gelangt.

Austragschleusen sind bekannt und müssen nicht näher beschrieben werden.

Die vorliegende Erfindung betrifft weiterhin eine Futter- oder Nahrungsmittelmühle, umfassend einen Schleusentisch wie hier beschrieben.

Futter- oder Nahrungsmittelmühlen sind bekannt und müssen hier nicht näher erläutert werden.

Die vorliegende Erfindung wird nachstehend anhand von nicht einschränkenden Beispielen und Zeichnungen näher erläutert. Es zeigen:
- Fig. 1A: eine schematische Darstellung einer ersten erfindungsgemässen Ausführungsform eines Leitungsrohres
- Fig. 1B: eine schematische Darstellung einer zweiten erfindungsgemässen Ausführungsform eines Leitungsrohres
- Fig. 2: eine schematische Darstellung einer erfindungsgemässen Ausführungsform eines pneumatischen Leitungssystems
- Fig. 3a: eine schematische Darstellung eines Strömungsprofils in einem Leitungsrohr gemäss dem Stand der Technik
- Fig. 3b: eine schematische Darstellung eines Strömungsprofils in einem erfindungsgemässen Leitungsrohr gemäss Fig. 1A.

### Gleiche Bezugszeichen bezeichnen gleiche Bauteile.

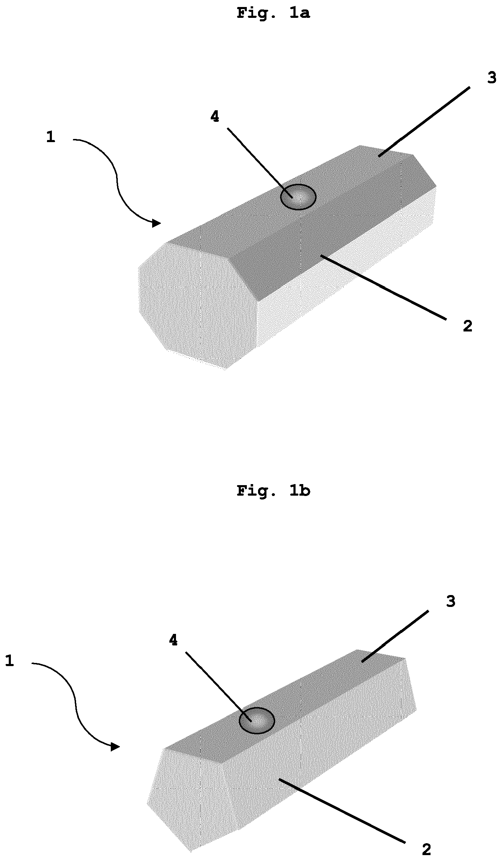

In Fig. 1A ist eine schematische Darstellung einer ersten erfindungsgemässen Ausführungsform eines Leitungsrohres 1 gezeigt. Das Leitungsrohr 1 umfasst einen Basiskörper 2, dessen Schnittfläche in dieser Ausführungsform eine achteckige (oktagonale) Form aufweist. Das Leitungsrohr 1 umfasst weiterhin eine im Wesentlichen flache Grundfläche 3, in welcher eine Öffnung 4 angeordnet ist. In Fig. 1 ist aus Gründen der Übersichtlichkeit nur eine Öffnung 4 gezeigt. Es können aber mehrere Öffnungen 4 vorhanden sein.

In Fig. 1B ist eine schematische Darstellung einer zweiten erfindungsgemässen Ausführungsform eines Leitungsrohres 1 gezeigt. Diese Ausführungsform unterscheidet sich von der Ausführungsform gemäss Fig. 1A darin, dass die Schnittfläche des Basiskörpers 2 eine fünfeckige Form aufweist.

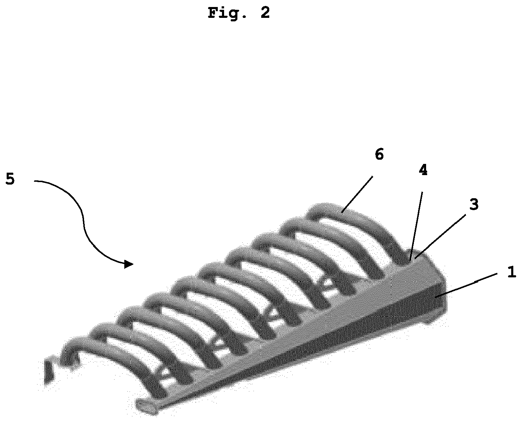

In Fig. 2 ist eine schematische Darstellung einer erfindungsgemässen Ausführungsform eines pneumatischen Leitungssystems (5) gezeigt. Das pneumatische Leitungssystem (5) umfasst ein Leitungsrohr (1) und mehrere Übergangsrohre (6), von denen der Übersichtlichkeit halber nur ein Übergangsohr mit dem entsprechenden Bezugszeichen gekennzeichnet ist. Die Übergangsrohre (6) sind gebogen und gehen mit demselben Übergangswinkel in die jeweilige Öffnung (4) in der im Wesentlichen flachen Grundfläche (3) des Leitungsrohres (1) hinein. Die Schnittfläche des Leitungsrohres (1) ist achteckig (oktagonal), wie in Fig. 1A gezeigt.

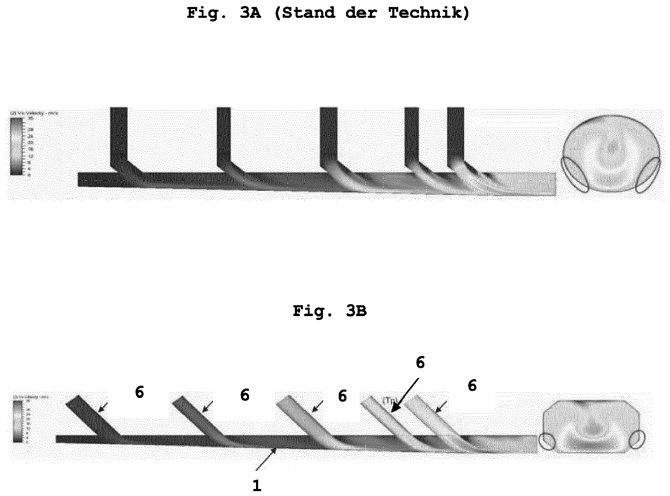

In Fig. 3A ist eine schematische Darstellung eines Strömungsprofils in einem Leitungsrohr gemäss dem Stand der Technik gezeigt. Das Leitungsrohr gemäss des Stands der Technik ist rund. Die Übergangsrohre sind aufgeflanscht. Man erkennt, dass im runden Leitungsrohr im Bodenbereich vergleichsweise grosse Verlustzonen (durch den Kreis markiert) ausgebildet sind, in denen Luft nur mit relativ geringer Geschwindigkeit strömt.

In Fig. 3B ist eine schematische Darstellung eines Strömungsprofils in einem Leitungsrohr 1 gemäss der vorliegenden Erfindung gezeigt. Die Schnittfläche des Leitungsrohrs 1 ist achteckig, entsprechend der in Fig. 1A gezeigten Ausführungsform. In Öffnungen des erfindungsgemässen Leitungsrohrs 1 sind wie vorstehend beschrieben mehrere Übergangsrohre 6 mit demselben Übergangswinkel eingeführt. Man erkennt, dass im erfindungsgemässen Leitungsrohr 1 im Bodenbereich nur vergleichsweise kleine Verlustzonen (durch den Kreis markiert) ausgebildet sind, in denen Luft nur mit relativ geringer Geschwindigkeit strömt. Die Luft strömt durch das erfindungsgemässe Leitungsrohr 1 mit einer erhöhten Energieeffizienz; das Risiko von Partikelablagerungen ist verringert.

## Patentansprüche

1. Leitungsrohr (1) für ein pneumatisches Leitungssystem (5) einer Futter- oder Nahrungsmittelmühle, umfassend einen Basiskörper (2), mindestens eine im Wesentlichen flache Grundfläche (3), und mindestens eine in der Grundfläche (3) angeordnete Öffnung (4) zur Verbindung mit einem Übergangsrohr (6).

2. Leitungsrohr (1) nach Anspruch 1, **dadurch gekennzeichnet, dass** der Basiskörper (2) im Durchmesser die Form eines Halbkreises oder eines Vielecks aufweist.

3. Leitungsrohr (1) nach Anspruch 2, **dadurch gekennzeichnet, dass** der Basiskörper (2) im Durchmesser die Form eines Oktagons aufweist.

4. Leitungsrohr (1) nach einem der Ansprüche 1 bis 3, **dadurch gekennzeichnet, dass** das Leitungsrohr (1) aus rostfreiem Edelstahl gefertigt ist.

5. Pneumatisches Leitungssystem (5) für eine Futter- oder Nahrungsmittelmühle, umfassend ein Leitungsrohr (1) gemäss einem der Ansprüche 1 bis 4, und mindestens ein Übergangsrohr (6), welches mit einer Öffnung (4) verbunden ist, die in einer im Wesentlichen flachen Grundfläche (3) des Leitungsrohres (1) angeordnet ist.

6. Pneumatisches Leitungssystem (5) nach Anspruch 5, **dadurch gekennzeichnet, dass** das Leitungsrohr (1) und das mindestens eine Übergangsrohr (6) lösbar miteinander verbunden sind.

7. Pneumatisches Leitungssystem (5) nach Anspruch 5 oder 6, **dadurch gekennzeichnet, dass** das mindestens eine Übergangsrohr (6) mit einem Übergangswinkel von 0° bis 60°, vorzugsweise 5° bis 45° in eine Öffnung (4) des Leitungsrohres eingeführt ist.

8. Pneumatisches Leitungssystem (5) nach einem der Ansprüche 5 bis 7, **dadurch gekennzeichnet, dass** das mindestens eine Übergangsrohr (6) gebogen ist und vorzugsweise mit Hilfe des Dornbiegeverfahrens hergestellt wurde.

9. Schleusentisch für eine Futter- oder Nahrungsmittelmühle, umfassend ein Leitungsrohr (1) gemäss einem der Ansprüche 1 bis 4.

10. Schleusentisch für eine Futter- oder Nahrungsmittelmühle, umfassend ein pneumatisches Leitungssystem (5) gemäss einem der Ansprüche 5 bis 8.

11. Schleusentisch nach Anspruch 10 **dadurch gekennzeichnet, dass** pro Übergangsleitung (6) des pneumatischen Leitungssystems (5) ein Zyklonabscheider, eine Austragsschleuse und eine Klappe bereitgestellt ist.

12. Futter- oder Nahrungsmittelmühle, umfassend einen Schleusentisch gemäss einem der Ansprüche 9 bis 11.
